# DEMANDE DE BREVET EUROPEEN

(11) **EP 4 811 499 A1**
(43) Date de publication de la demande: **23.09.2026**
(21) Numéro de dépôt: 26164528.7
(22) Date de dépôt: 13.03.2026
(51) Int. Cl.: H01M 10/6567, B60L 1/02, B60L 3/12, B60L 50/64, B60L 58/21, B60L 58/26, B60L 58/27, H01M 10/48, H01M 10/617, H01M 10/635, H01M 10/647, H01M 10/651, H01M 10/657, B60H 1/00, B60K 1/00, H02J 105/37

(54) **SYSTÈME ET PROCÉDÉ D'OPTIMISATION DU FONCTIONNEMENT D'UN DISPOSITIF DE BATTERIE D'UN VÉHICULE**

(30) Priorité: 14.03.2025 FR 2502619
(71) Demandeur: AMPERE s.a.s., 92100 Boulougne-Billancourt (FR)
(72) Inventeur: FELTEN, Aurelie, 78280 Guyancourt (FR); RECOUVREUR, Phili, 78280 Guyancourt (FR); THOREAU, Maxime, 78280 Guyancourt (FR)
(74) Mandataire: Renault Group

(57) **Abrégé**

Procédé d'optimisation du fonctionnement d'un dispositif de batterie (3) d'un véhicule comprenant une phase d'estimation d'une température minimale correspondant à une température estimée en un point le plus froid du dispositif de batterie (3) compris dans une cellule électrochimique primaire (4a), ladite phase comprenant l'estimation d'une température d'un boîtier (30) du dispositif (3), l'estimation d'une puissance électrique d'une plaque chauffante (6) du dispositif (3) et la mesure d'une température d'au moins une cellule électrochimique secondaire (4b) distincte de la cellule électrochimique primaire (4a).

## Description

L'invention concerne un procédé d'optimisation du fonctionnement d'un dispositif de batterie d'un véhicule à motorisation électrique ou hybride. L'invention porte encore sur un système d'optimisation du fonctionnement d'un dispositif de batterie configuré pour mettre en œuvre le procédé selon l'invention. L'invention s'étend enfin à un véhicule automobile équipé dudit système.

Lors des phases de fonctionnement à froid d'une batterie haute tension d'un véhicule à motorisation électrique ou hybride, aussi qualifié de dispositif de batterie ou dispositif de stockage d'énergie électrique, il est nécessaire d'adapter le pilotage de la batterie afin d'en prévenir l'usure accélérée.

Par exemple, la puissance électrique maximale de charge ou de décharge du dispositif de batterie est pilotée en fonction d'une température la plus basse mesurée au niveau d'une cellule électrochimique du dispositif de batterie. En effet il est alors nécessaire d'ajuster la puissance électrique du dispositif de batterie afin de limiter l'activité électro-chimique des cellules les plus froides afin d'éviter de les endommager et ainsi optimiser la durabilité du dispositif de batterie.

Classiquement, la température la plus basse du dispositif de batterie est mesurée par l'intermédiaire d'un capteur de température. Par exemple, des thermistances sont disposées sur des cellules de la batterie de sorte à mesurer à la fois les points les plus chauds et les plus froids du dispositif de batterie. Néanmoins, le nombre de capteurs au sein du dispositif de batterie peut parfois être limité par des contraintes matérielles, par exemple par le nombre de d'entrées que peut recevoir une unité de traitement associée au dispositif de batterie, par des contraintes d'encombrement et/ou par des contraintes de coûts.

Dans le cas de dispositifs de batteries comprenant une plaque chauffante disposée au contact des cellules électrochimiques afin d'assurer la gestion thermique du dispositif de batterie, l'écart de température entre le point le plus chaud des cellules électrochimiques, disposé à proximité de la plaque chauffante, et la température minimale, généralement présente sur une partie opposée de l'une des cellules électrochimiques, à distance de la plaque chauffante, est d'autant plus important. Afin d'assurer la sécurité des usagers, le positionnement de capteurs au niveau de points chauds du dispositif de batterie est privilégié. Le dispositif de batterie peut alors être dépourvu de capteur configuré pour mesurer la température au niveau du point le plus froid du dispositif de batterie.

L'absence de capteur apte à mesurer la température la plus basse dans le dispositif de batterie est alors susceptible d'entrainer une usure accélérée du dispositif de batterie, voire son endommagement, du fait d'un pilotage inadapté du dispositif de batterie par rapport aux cellules les plus froides du dispositif de batterie.

L'invention s'inscrit dans ce contexte et vise à résoudre les inconvénients exposés plus haut en proposant un système et procédé d'optimisation du fonctionnement d'un dispositif de batterie permettant d'estimer la valeur de la température minimale au sein dudit dispositif afin d'en permettre un pilotage adapté en l'absence de capteur au niveau d'un point froid du dispositif de batterie.

L'invention concerne un procédé d'optimisation du fonctionnement d'un dispositif de batterie d'un véhicule, ledit dispositif comprenant un boîtier et des cellules électrochimiques, le dispositif de batterie comprenant, en outre, une plaque de refroidissement, configurée pour permettre la circulation d'un fluide caloporteur, et une plaque chauffante électrique. Le procédé comprend une phase d'estimation d'une température minimale correspondant à une température estimée en un point le plus froid du dispositif de batterie compris dans une cellule électrochimique primaire, ladite phase comprenant :
- l'estimation d'une température du boîtier comportant la mesure d'une température extérieure au véhicule par l'intermédiaire d'un capteur et/ou la mesure d'une température de la plaque de refroidissement par l'intermédiaire d'un capteur de température ;
- l'estimation d'une puissance électrique de la plaque chauffante comportant la mesure d'une tension du dispositif de batterie et d'une intensité du courant de ladite plaque chauffante ;
- la mesure d'au moins une température d'au moins une cellule électrochimique secondaire distincte de la cellule électrochimique primaire par l'intermédiaire d'un capteur ;
- l'estimation de la température minimale à un instant t donné à partir de la température du boîtier, de la puissance électrique de la plaque chauffante et de la température de la cellule électrochimique secondaire.

Notamment, tout ou parties des cellules électrochimiques forment un module de batterie.

Notamment, la plaque chauffante est disposée de sorte à être interposée entre la plaque de refroidissement et les cellules électrochimiques et/ou la cellule électrochimique secondaire présente une position centrale, plus distante d'une paroi latérale du boîtier et/ou d'une plaque extrêmale que la cellule électrochimique primaire.

Selon un exemple, le dispositif de batterie comprend une pluralité de modules de batterie comportant chacun au moins une cellule électrochimique secondaire, le procédé comprenant la mesure d'une température des cellules électrochimiques secondaires propres aux différents modules de batterie par l'intermédiaire de capteurs et l'estimation de la température minimale étant réalisée à partir d'une température la plus basse sélectionnée parmi les températures mesurées au niveau des cellules électrochimiques secondaires des différents modules de batterie.

Selon des exemples d'exécution, l'estimation de la température minimale au sein du dispositif de batterie à un instant t donné comprend l'application d'au moins l'une parmi :
- une correction configurée pour prendre en compte une hétérogénéité de température de la plaque chauffante ;
- une constante représentative d'au moins une caractéristique relative à la structure du dispositif de batterie et/ou à la structure des cellules électrochimiques ; et/ou
- une correction représentative d'une latence liée à l'inertie thermique entre la puissance de chauffe délivrée par la plaque chauffante et son impact sur la température minimale de la cellule électrochimique primaire.

Par exemple, l'estimation de la température minimale au sein du dispositif de batterie à un instant t donné comprend l'application d'une constante représentative de la structure du dispositif de batterie et/ou des cellules électrochimiques et l'application de la correction configurée pour prendre en compte une hétérogénéité de température de la plaque chauffante, l'estimation de la température minimale en fonction du temps étant définie par : $\begin{matrix}\frac{dTmin \left(t\right)}{dt} = \\ \frac{dT _ cell _ sec \left(t\right)}{dt} + \left(\frac{α - 1}{m . Cp}\times P_plaque_ch\left(t\right)\right) \\ + \frac{\left(T_boîtier\left(t\right)-T_min\left(t-k\right)\right)}{m . Cp . R _ pertes}\end{matrix}$

Où :
dTmin/dt est l'évolution de la température minimale estimée en fonction du temps ;
Tmin est la température minimale estimée au sein du dispositif de batterie à un instant t-k ;
T_cell_sec est la température mesurée de l'au moins une cellule électrochimique secondaire à l'instant t ;
m.Cp est la constante structurelle appliquée en fonction de la structure du dispositif de batterie, notamment des cellules électrochimiques ;
P_plaque_ch est la puissance électrique de la plaque chauffante appliquée à l'instant t ;
T_boîtier est la température estimée du boîtier à l'instant t ;
R_pertes correspond à une résistance thermique de la cellule électrochimique primaire vers le boîtier ;
α est la constante représentative de l'hétérogénéité du chauffage de la plaque chauffante.

Notamment, l'estimation de la température minimale au sein du dispositif de batterie à un instant t donné comprend la prise en compte d'une estimation antérieure de la température minimale au sein du dispositif de batterie, obtenue à un instant t-k.

Optionnellement, la phase d'estimation est mise en œuvre à intervalle de temps régulier ou en temps réel :
- lors d'une période pendant laquelle un écart de température entre l'au moins une température mesurée de l'au moins une cellule électrochimique secondaire et une valeur de la température minimale préalablement estimée est strictement supérieure à un seuil d'écart prédéfini ; et/ou
- lors d'une période de fonctionnement de la plaque chauffante et lors d'une période prédéfinie, suivant l'extinction de la plaque chauffante, de durée inférieure ou égale à un seuil de durée prédéfini.

Selon un exemple d'exécution, le procédé d'optimisation comprend, en outre, une phase d'utilisation de la température minimale estimée, comprenant :
- la détermination d'une valeur à appliquer d'au moins un paramètre prenant en compte la température minimale estimée, tel qu'une puissance électrique maximale de charge ou de décharge autorisée du dispositif de batterie, une puissance électrique de charge ou de décharge autorisée du dispositif de batterie à appliquer, une puissance électrique de la plaque chauffante et/ou une puissance électrique maximale de la plaque chauffante ;
- l'application de la valeur dudit paramètre.

L'invention porte également sur un système d'optimisation du fonctionnement d'un dispositif de batterie d'un véhicule équipé, le système comprenant des éléments matériels et/ou logiciels mettant en œuvre le procédé selon l'invention, les éléments matériels comportant au moins une unité de traitement de données et un module de détection comportant une pluralité de capteurs de température.

L'invention s'étend encore à un véhicule automobile comprenant un dispositif de batterie et un système d'optimisation du fonctionnement du dispositif de batterie selon l'invention.

L'invention peut également s'étendre à un produit programme d'ordinateur comprenant des instructions de code de programme enregistrées sur un support lisible par ordinateur pour mettre en œuvre les étapes du procédé selon l'invention lorsque ledit programme fonctionne sur un ordinateur. L'invention peut aussi porter sur un produit programme d'ordinateur téléchargeable depuis un réseau de communication et/ou enregistré sur un support de données lisible par un ordinateur et/ou exécutable par un ordinateur comprenant des instructions qui, lorsque le programme est exécuté par l'ordinateur, conduisent celui-ci à mettre en œuvre le procédé selon l'invention.

L'invention peut enfin porter sur un support d'enregistrement de données, lisible par un ordinateur, sur lequel est enregistré un programme d'ordinateur comprenant des instructions de code de programme de mise en œuvre du procédé selon l'invention.

D'autres détails, caractéristiques et avantages ressortiront plus clairement à la lecture de la description détaillée donnée ci-après, à titre indicatif et non limitatif, en relation avec les différents exemples de réalisation illustrés sur les figures suivantes :
La figure 1 est une représentation schématique simplifiée d'un exemple de réalisation d'un véhicule équipé d'un système d'optimisation du fonctionnement d'un dispositif de batterie.
La figure 2 est une représentation schématique en coupe d'un dispositif de batterie contenant un seul module.
La figure 3 est un organigramme général illustrant un procédé d'optimisation du fonctionnement d'un dispositif de batterie.
La figure 4 un organigramme illustrant un exemple d'une phase d'estimation d'une température minimale du procédé d'optimisation.

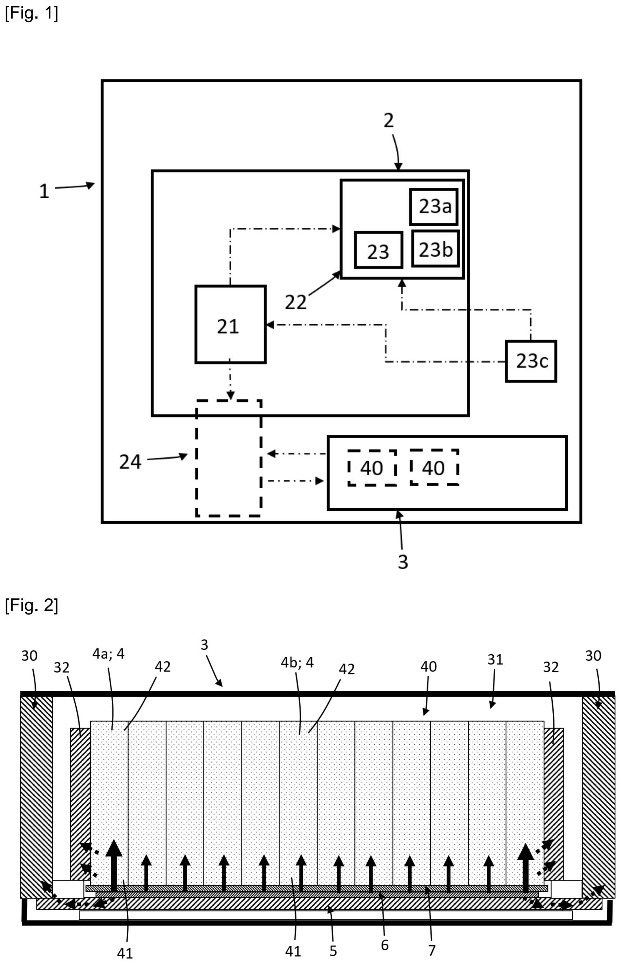

La figure 1 illustre schématiquement un véhicule 1 automobile équipé de modes de réalisation d'un système d'optimisation 2 du fonctionnement d'un dispositif de batterie d'un véhicule 1. Le véhicule 1 peut être de toute nature, c'est-à-dire qu'il peut s'agir d'un véhicule particulier, d'un véhicule utilitaire, d'un camion ou d'un bus. Également, le véhicule peut être un véhicule autonome ou non autonome.

Le véhicule 1 est un véhicule à motorisation électrique ou hybride équipé d'au moins un groupe motopropulseur électrique, aussi qualifié de moteur électrique. Le véhicule 1 comprend un dispositif de batterie 3, aussi connu sous le nom de dispositif de stockage d'énergie électrique ou « battery pack» en anglais, configuré pour stocker de l'énergie électrique nécessaire au fonctionnement du moteur électrique, dans le but d'accélérer ou de décélérer le véhicule et fournir au moteur électrique l'énergie nécessaire à faire avancer le véhicule 1.

De manière connue, le dispositif de batterie 3 comprend une pluralité de cellules électrochimiques 4. Notamment, lesdites cellules électrochimiques 4 sont organisées en au moins un module de batterie 40, voire en une pluralité de modules de batterie 40. Particulièrement, le dispositif de batterie 3 comprend une pluralité de modules de batterie 40, chaque module de batterie 40 comprenant une pluralité de cellules électrochimiques 4.

Les cellules électrochimiques 4 sont aptes à stocker de l'énergie sous forme chimique et à la restituer sous forme d'un courant électrique. Les cellules électrochimiques 4 peuvent, par exemple, être du type « lithium-ion », aussi appelé « Li-ion ». Selon l'exemple de réalisation illustré, les cellules électrochimiques 4 sont du type prismatique. Selon des alternatives non représentées, les cellules électrochimiques 4 ont une structure cylindrique, notamment à base prismatique, ou une structure souple, aussi connues sous le nom de « pouch cells ».

Il est à noter que, dans l'ensemble des figures représentant le dispositif de batterie 3, les dimensions et espacements séparant les différents composants peuvent être exagérés à des fins de clarté.

Le dispositif de batterie 3 comprend un boîtier 30 dans lequel sont disposées les cellules électrochimiques 4, notamment dans lequel sont disposés les modules de batterie 40 comprenant lesdites cellules électrochimiques 4. Le boîtier 30 est configuré pour délimiter une structure extérieure du dispositif de batterie 3, il comprend ainsi une pluralité de parois externes, notamment des parois latérales. Le boîtier 30 délimite ainsi un volume interne 31 dans lequel sont disposés les cellules électrochimiques 4 et/ou l'au moins un module de batterie 40. Tel que d'avantage exposé ci-après, le boîtier 30 peut être réalisé dans un matériau métallique, par exemple en aluminium et/ou en tôle.

Optionnellement, lorsque les cellules électrochimiques 4 sont organisées en modules de batterie 40, chaque module de batterie 40 comprend une pluralité de plaques extrêmales 32, aussi qualifiées de plaques de compression ou « end plates » en anglais. Lesdites plaques extrémales 32 participent à assurer la structure d'un module de batterie 40 considéré et peuvent participer à maintenir les cellules électrochimiques 4 en position.

Également, afin d'assurer la gestion thermique du dispositif de batterie 3, ce dernier comprend au moins une plaque de refroidissement 5 disposée dans le volume interne 31 et configurée pour permettre la circulation d'un fluide caloporteur de sorte à mettre en œuvre un échange thermique entre le fluide caloporteur circulant dans la plaque de refroidissement 5 et les cellules électrochimiques 4, notamment de sorte à capter des calories émises par lesdites cellules.

Additionnellement, le dispositif de batterie 3 comprend au moins une plaque chauffante 6 électrique, aussi qualifiée de « nappe chauffante », configurée pour mettre en oeuvre un échange thermique avec les cellules électrochimiques 4, notamment de sorte à céder des calories auxdites cellules afin de les chauffer.

Particulièrement, la plaque chauffante 6 est disposée de sorte à être interposée entre la plaque de refroidissement 5 et les cellules électrochimiques 4 le long d'au moins une direction. La plaque chauffante 6 est ainsi disposée à proximité ou au contact d'une portion des cellules électrochimiques 4, par exemple d'une base des cellules électrochimiques 4, ici qualifiée de portion proximale 41 desdites cellules électrochimiques 4. A l'inverse, on qualifiera de « portion distale 42 » une portion de la cellule électrochimique considérée comprenant une extrémité de la cellule la plus distante de la plaque chauffante 4. Classiquement, du fait du positionnement de la plaque chauffante 6, un écart de température peut être observé entre la portion proximale 41 et la portion distale 42 d'une cellule électrochimique 4 considérée. Un tel écart de température est notamment d'autant plus important lorsque la température de la plaque chauffante 6 augmente. Inversement, classiquement, lorsque la plaque chauffante 6 n'est pas en fonctionnement et qu'aucun échange thermique n'est mis en œuvre entre ladite plaque et les cellules électrochimiques 4, l'écart de température entre la portion proximale 41 et la portion distale 42 d'une cellule électrochimique 4 considérée est négligeable, voire nul.

Optionnellement, selon un exemple de réalisation préférentiel illustré à la figure 2, le dispositif de batterie 3 comprend un organe d'interface thermique 7, par exemple une couche comprenant un matériau d'interface thermique tel qu'une « pâte thermique », couramment appelée « gap filler », une « colle thermique », couramment appelée « thermal resin », ou encore un « coussin thermique conducteur adhésif », souvent appelé « thermal pad », disposé au contact des cellules électrochimiques 4 de sorte à être interposé entre lesdites cellules et la plaque chauffante 6.

La présence d'au moins une plaque chauffante 6 et d'au moins une plaque de refroidissement 5 permet ainsi avantageusement d'assurer la gestion thermique du dispositif de batterie 3 de sorte à permettre son fonctionnement dans des plages de températures optimales, c'est-à-dire notamment des plages de températures visant à limiter l'usure du dispositif de batterie 3 classiquement observées lorsque le dispositif de batterie 3 fonctionne à des températures inadaptées au type de cellules électrochimiques 4 qu'il comprend.

Par exemple et de manière non limitative, la plaque chauffante 6 est mise en fonctionnement lorsque le dispositif de batterie 3 est froid, c'est-à-dire en « ambiance froide », correspondant à des conditions dans lesquelles, du fait de la faible température, les performances de la batterie sont fortement dégradées et dans lesquelles il est nécessaire de mettre en œuvre le réchauffement des cellules électrochimiques 4. Par exemple, la plaque chauffante 6 est mise en fonctionnement lorsque la température du dispositif de batterie 3 est inférieure ou égale à 0°C. Notamment, l'activation de la plaque chauffante 6 est mise en œuvre en fonction d'un seuil de température du dispositif de batterie 3 défini dans le cadre d'un mode de « préconditionnement » du véhicule 1, correspondant à une mise en température d'équipements définis du véhicule 1 à une heure prédéfinie. Il est entendu que l'invention peut également s'étendre à d'autres cas d'usages, par exemple relatifs au roulage du véhicule 1 ou à la charge du dispositif de batterie 3.

Dans la description ci-après, le dispositif de batterie 3 décrit comprend une unique plaque de refroidissement 5 et une unique plaque chauffante 6. Il est néanmoins entendu que l'invention peut s'étendre à un dispositif de batterie 3 comprenant une pluralité de plaques de refroidissement 5 et/ou de plaques chauffantes 6. Par ailleurs, l'invention est ici décrite dans le cadre d'un dispositif comprenant un nombre Nx de modules de batterie 40 comprenant chacun un nombre Cx de cellules défini, ici par exemple douze cellules électrochimiques 4. Il est néanmoins entendu qu'une telle architecture n'est en rien limitative. Par exemple, l'invention peut s'étendre *mutatis mutandis à* un dispositif de batterie 3 de type « cell to pack », c'est-à-dire comprenant une pluralité de cellules électrochimiques 4 n'étant pas organisées sous la forme de modules de batterie 40 susceptibles de présenter une hétérogénéité dans la répartition de la température.

Le véhicule 1 selon l'invention comprend, en outre, un système d'optimisation 2 du fonctionnement du dispositif de batterie 3 qui comporte les éléments matériels et/ou logiciels configurés pour mettre en œuvre un procédé d'optimisation 100 du fonctionnement du dispositif de batterie 3 selon l'invention. Lesdits éléments matériels comportent au moins une unité de traitement 21 de données et un module de détection 22 comportant une pluralité de capteurs 23, notamment au moins des capteurs 23 de température. A des fins de simplification, la figure 1 présente de manière fonctionnelle les différents systèmes et éléments. Pour autant, les capteurs 23 de température sont reliés aux cellules électrochimiques 4, et peuvent être complètement intégrés au dispositif de batterie 3. Selon une configuration privilégiée, l'unité de traitement 21 est également logée dans un calculateur qui se trouve dans le dispositif de batterie 3.

L'unité de traitement 21 comprend au moins une unité de calcul comportant des ressources matérielles et logicielles, plus précisément au moins un processeur ou microprocesseur. L'unité de traitement 21 comprend des éléments de mémoire et/ou est configurée pour coopérer avec des éléments de mémoire équipant le véhicule 1. L'unité de calcul est notamment apte à exécuter des instructions pour la mise en œuvre d'un programme d'ordinateur.

Le module de détection 22 comprend une pluralité de capteurs 23, tel que davantage détaillé ci-après. Notamment, le module de détection 22 comprend au moins un capteur 23a de température apte à mesurer une température de l'une des cellules électrochimiques 4 du dispositif de batterie 3, tel qu'une thermistance.

Optionnellement, le module de détection 22 comprend un capteur de température 23b apte à mesurer une température de la plaque de refroidissement 5 Alternativement, ladite température est obtenue par l'intermédiaire d'une unité de contrôle de la plaque de refroidissement 5, apte à émettre des consignes de pilotage de ladite plaque afin d'en adapter la température.

Optionnellement, le module de détection 22 comprend un capteur 23c de température apte à mesurer une température extérieure au véhicule 1. Alternativement, un tel capteur 23c est compris dans un système distinct du véhicule 1, tel qu'une installation de ventilation, de chauffage et/ou de climatisation du véhicule 1, les données mesurées par un tel capteur 23c étant alors transmises à l'unité de traitement 21. Par exemple, un tel capteur 23c est disposé à l'avant du véhicule 1 ou au niveau d'un rétroviseur du véhicule 1.

Optionnellement encore, le module de détection 22 comprend un capteur de tension et/ou d'intensité apte à mesurer des données relatives à la plaque chauffante 6. Alternativement, de telles données sont obtenues par l'intermédiaire d'une unité de contrôle de la plaque chauffante 6, apte à émettre des consignes de pilotage de ladite plaque afin d'en adapter la température et la puissance.

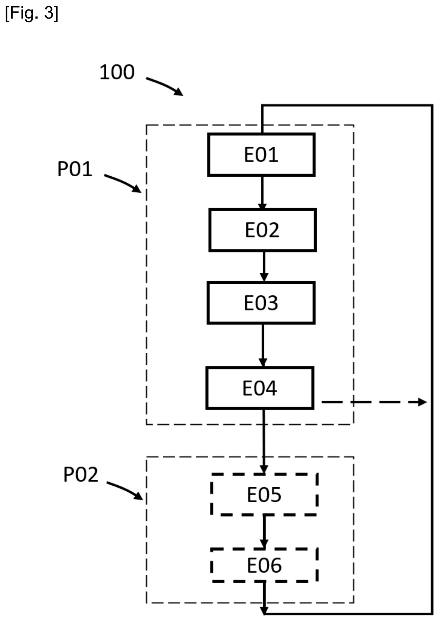

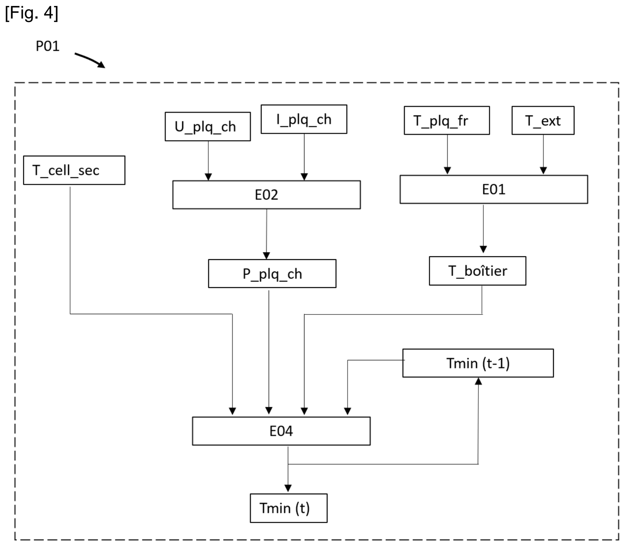

Les figures 3 et 4 illustrent schématiquement un mode d'exécution du procédé d'optimisation 100 du fonctionnement d'un dispositif de batterie 3 d'un véhicule 1 à motorisation électrique ou hybride mis en oeuvre par le système d'optimisation 2 tel que précédemment exposé. Un tel procédé est assimilable à un procédé de fonctionnement du système d'optimisation 2 ou à un procédé de fonctionnement d'un véhicule 1 équipé d'un tel système.

De manière générale le procédé comprend une phase d'estimation P01 d'une température minimale Tmin au sein du dispositif de batterie 3, correspondant à une température estimée en un point le plus froid du dispositif de batterie 3 compris au niveau d'une cellule électrochimique 4 dite « cellule électrochimique primaire 4a ». La phase d'estimation P01 de la température minimale Tmin au sein du dispositif de batterie 3 permet ainsi une modélisation de la température minimale Tmin à partir de données pouvant être mesurées, estimées et/ou reçues par le système d'optimisation 2.

De manière générale, la phase d'estimation P01 de la température minimale Tmin au sein du dispositif de batterie 3 comprend l'estimation E01 d'une température du boîtier 30, l'estimation E02 d'une puissance électrique P_plq_ch de la plaque chauffante 6 et la mesure E03 d'au moins une température d'au moins une cellule électrochimique secondaire 4b.

Les termes « primaire », « secondaire », « premier » et « deuxième » ont ici vocation à distinguer des éléments similaires et non à établir une hiérarchie d'importance. En l'espèce, tel que davantage détaillé ci-après, on distingue au moins une cellule électrochimique primaire 4a d'au moins une cellule électrochimique secondaire 4b, lesdites cellules étant distinctes de par leurs positions et/ou de par les températures de fonctionnement qu'elles sont susceptibles de présenter, notamment du fait de leur position.

Particulièrement, l'au moins une cellule électrochimique primaire 4a comprend le point le plus froid du dispositif de batterie 3 et/ou d'au moins un module de batterie 40 considéré notamment parce qu'elle présente des pertes thermiques plus importantes du fait de sa position. A l'inverse, l'au moins une cellule électrochimique secondaire 4b, au niveau de laquelle l'au moins une mesure de température est réalisée, est disposée dans le dispositif de batterie 3 et/ou l'au moins un module de batterie 40 au niveau de zones ou les pertes thermiques sont moins importantes qu'au niveau de l'au moins une cellule électrochimique primaire 4a. Notamment, le point froid considéré et le point de mesure de l'au moins une cellule électrochimique secondaire 4b sont compris dans les portions distales 42 des cellules considérées, c'est-à-dire les portions les plus distantes de la plaque chauffante 6 et de la plaque de refroidissement 5, de sorte à prendre en considération des écarts de température entre les portions proximales 41 desdites cellules électrochimiques 4, disposées à proximité ou au contact de la plaque chauffante 6, et lesdites portions distales 42.

Notamment, au sein du dispositif de batterie 3 et/ou d'un module considéré, l'au moins une cellule électrochimique primaire 4a présente une position extrémale, c'est-à-dire qu'elle présente une plus grande proximité avec au moins l'une des parois du boîtier 30 du dispositif de batterie 3 et/ou avec l'une des plaques extrémales 32 de l'un des modules de batterie 40 considéré. Notamment, l'au moins une cellule électrochimique primaire 4a est disposée au contact de l'une des plaques extrêmales 32 de l'un des modules de batterie 40. Une telle position de l'au moins une cellule électrochimique primaire 4a correspond à une position au niveau de laquelle ladite cellule électrochimique est le plus susceptible de subir des pertes thermiques non négligeables de par sa proximité avec le boîtier 30 du dispositif de batterie 3, et par extension avec l'environnement extérieur au dispositif de batterie 3, et/ou de par sa proximité ou son contact avec l'une des plaques extrêmales 32. De telles pertes thermiques tendent particulièrement à augmenter lorsque la température de la plaque chauffante 6 augmente et/ou lorsque la température extérieure au véhicule 1 s'abaisse.

Inversement, l'au moins une cellule électrochimique secondaire 4b est disposée dans une zone centrale du dispositif de batterie 3 et/ou de l'un des modules de batterie 40. L'au moins une cellule électrochimique secondaire 4b, au niveau de laquelle l'au moins une mesure de température est réalisée, correspond à une cellule électrochimique 4 au niveau de laquelle les pertes thermiques sont les plus faibles, voire sont négligeables du fait de sa position. Notamment, l'au moins une cellule électrochimique secondaire 4b est encadrée par au moins deux cellules électrochimiques 4, c'est-à-dire qu'au moins deux faces d'une enveloppe délimitant l'au moins une cellule électrochimique secondaire 4b sont disposées au contact de cellules électrochimiques 4 adjacentes, lesdites cellules électrochimiques 4 adjacentes étant, similairement à l'au moins une cellule électrochimique secondaire 4b, aptes à être chauffées par la plaque chauffante 6. Un écart de température entre l'au moins une cellule électrochimique secondaire 4b et les cellules électrochimiques 4 adjacentes est ainsi plus faible que l'écart de température présent entre l'au moins une cellule électrochimique primaire 4a et l'une des plaques extrêmale 32 adjacente. Notamment, lors de l'exécution du procédé selon l'invention, les éventuelles pertes thermiques résultant de l'écart de température entre l'au moins une cellule électrochimique secondaire 4b et les cellules électrochimiques adjacentes 4 sont considérées comme négligeables, voire nulles.

De manière optionnelle mais préférentielle, le procédé selon l'invention, notamment la phase d'estimation P01, est mis en œuvre à intervalle de temps régulier ou en temps réel lors d'une période de fonctionnement de la plaque chauffante 6, c'est-à-dire lorsque la plaque chauffante 6 est allumée et assure la gestion thermique du dispositif de batterie 3 de sorte à chauffer les cellules électrochimiques 4.

Additionnellement ou alternativement, le procédé selon l'invention, notamment la phase d'estimation P01, est mis en œuvre à intervalle de temps régulier ou en temps réel lors d'une période prédéfinie suivant l'extinction de la plaque chauffante 6, une telle période présentant une durée inférieure ou égale à un seuil de durée S_t_ext prédéfini. Un tel principe vise à assurer une optimisation du fonctionnement du dispositif de batterie 3 lorsque la plaque chauffante 6 reste chaude suite à son extinction, c'est-à-dire lorsqu'elle présente une température strictement supérieure à une température nominale, ou température de repos. En effet, la plaque chauffante 6 est alors susceptible de céder des calories aux cellules électrochimiques 4 du dispositif de batterie 3 et, par voie de conséquence, de générer un écart de température entre les portions proximales 41 des cellules électrochimiques 4 et les portions distales 42 desdites cellules susceptible d'affecter leur fonctionnement. Optionnellement encore, un tel seuil de durée S_t_ext est fixé au-delà d'une période lors de laquelle la plaque chauffante 6 est apte à céder des calories aux cellules électrochimiques 4. Un tel principe permet d'éviter une limitation de la performance du véhicule liée à une limitation de la puissance batterie.

Optionnellement encore, de manière additionnelle ou alternative, le procédé selon l'invention, notamment la phase d'estimation P01, est mis en œuvre à intervalle de temps régulier ou en temps réel lors d'une période pendant laquelle un écart de température entre l'au moins une température mesurée de l'au moins une cellule électrochimique secondaire 4b et une valeur de la température minimale Tmin préalablement estimée est strictement supérieure à un seuil d'écart S_diff_temp prédéfini. Autrement dit, le procédé selon l'invention est alors mis en œuvre tant qu'un écart de température entre le point froid du dispositif de batterie 3 et l'au moins une température mesurée dans l'une des cellules électrochimiques secondaire 4b considéré est strictement supérieur au seuil d'écart S_diff_temp prédéfini. Un tel seuil d'écart S_diff_temp correspond notamment à un écart de température entre l'au moins une cellule électrochimique primaire 4a et l'au moins une cellule électrochimique secondaire 4b pour lequel les pertes thermiques observées au niveau de l'au moins une cellule électrochimique primaire 4a sont non négligeables.

L'estimation E01 de la température du boîtier T_boîtier à un instant t donné comprend la mesure d'une température extérieure T_ext au véhicule 1 par l'intermédiaire et/ou la mesure d'une température de la plaque de refroidissement T_plq_fr respectivement par l'intermédiaire des capteurs 23c ou 23b décrits plus haut. En effet, le boîtier 30 est disposé au contact de l'air ambiant, aussi, la mesure de la température extérieure T_ext au véhicule 1 permet classiquement une estimation de la température du boîtier T_boîtier. De même, le capteur 23b de température disposé au niveau la plaque de refroidissement 5 est classiquement disposé à proximité du boîtier 30. Il permet alors d'obtenir une estimation de la température du boîtier T_boîtier.

A noter que, lorsque la plaque chauffante 6 est en fonctionnement, elle tend à réchauffer la plaque de refroidissement 5 par contact ou de par sa proximité, affectant de ce fait la mesure de température de la plaque de refroidissement T_plq_fr utilisée pour estimer la température du boîtier T_boîtier du dispositif de batterie 3. Aussi, de manière optionnelle mais préférentielle, le procédé comprend l'estimation de la température du boîtier T_boîtier par :
- mesure de la température de la plaque de refroidissement T_plq_fr lorsque la plaque chauffante 6 présente une température inférieure ou égale à un seuil limite de température S_lim_ch prédéfini et/ou lorsque la plaque chauffante 6 est en fonctionnement depuis une durée inférieure ou égale à un seuil de durée S_tps_lim de fonctionnement prédéfini ; et/ou
- mesure de la température extérieure T_ext.

Alternativement ou additionnellement, dans de telles conditions, la température du boîtier T_boîtier est optionnellement estimée par calcul d'une moyenne pondérée entre la température mesurée de la plaque de refroidissement T_plq_fr et la température extérieure T_ext. Notamment, une telle moyenne est calculée lorsque la plaque chauffante 6 présente une température inférieure ou égale au seuil limite de température S_lim_ch prédéfini et/ou lorsque la plaque chauffante 6 est en fonctionnement depuis une durée inférieure ou égale au seuil de durée S_tps_lim de fonctionnement prédéfini.

L'estimation de la température du boîtier T_boîtier comprend ainsi une sous-étape de mesure d'au moins l'une parmi la température de la plaque de refroidissement T_plq_fr et la température extérieure T_ext, puis la sélection de l'une desdites températures ou le calcul d'une moyenne pondérée desdites températures comme estimation de la température du boîtier T_boîtier selon les différents exemples d'exécution précités.

La détermination E02 d'une puissance électrique P_plq_ch de la plaque chauffante 6 mise en oeuvre à un instant t donné est déterminée de manière classique à partir de mesures d'une tension U_plq_ch de la plaque chauffante 6 et d'une intensité I_plq_ch du courant de ladite plaque chauffante 6. La détermination E02 de la puissance électrique P_plq_ch de la plaque chauffante 6 comprend ainsi une sous-étape de mesure de la tension U_plq_ch et de l'intensité I_plq_ch du courant de la plaque chauffante 6 puis une sous-étape de calcul, par l'unité de traitement 21, de la puissance électrique P_plq_ch de la plaque chauffante 6.

La prise en compte de la température du boîtier T_boîtier d'une part et de la température de la plaque chauffante 6 permet une évaluation, ou modélisation, des pertes thermiques non désirées, ou flux de chaleur non désiré, résultant de l'écart de température existant entre le boîtier 30, ou les plaques extrémales 32, d'une part et la plaque chauffante 6, et par voie de conséquence les cellules électrochimiques 4, d'autre part. De telles pertes sont représentées schématiquement à la figure 2 par des flèches en lignes pointillées représentative d'un flux de chaleur allant de la plaque chauffante 6 vers les plaques extrêmales 32 et/ou le boîtier 30 du dispositif de batterie 3.

La mesure E03 d'au moins une température T_cell_sec d'au moins une cellule électrochimique secondaire 4b distincte de la cellule électrochimique primaire 4a est réalisée par l'intermédiaire du capteur 23a de température du module de détection 22. Tel qu'indiqué plus haut, l'au moins une cellule électrochimique secondaire 4b, présente une position centrale, plus distante des parois du boîtier 30 et/ou d'une plaque extrêmale 32 de l'au moins un module de batterie 40 que la cellule électrochimique primaire 4a. Notamment, la mesure réalisée au niveau de la portion distale 42 de l'au moins une cellule électrochimique secondaire 4b correspond à une température la plus élevée au sein des différentes portions distales 42 des cellules électrochimiques.

A noter que la position d'une telle mesure peut être optionnellement définie par des essais effectués préalablement à la mise en circulation du véhicule 1.

Optionnellement, lorsque le dispositif de batterie 3 comprend une pluralité de modules de batterie 40, comportant chacun au moins une cellule électrochimique secondaire 4b, le procédé comprend alors la mesure de températures des cellules électrochimiques secondaires 4b propres aux différents modules de batterie 40 par l'intermédiaire de capteurs 23a. L'estimation de la température minimale Tmin est alors réalisée à partir d'une température la plus basse sélectionnée parmi les températures mesurées au niveau des cellules électrochimiques secondaires 4b des différents modules de batterie 40. Le point froid correspond ainsi au point le plus froid à l'échelle du dispositif de batterie 3 sélectionné parmi les points les plus froids de chaque modules de batterie 40.

L'estimation E04 de la température minimale Tmin à un instant t, aussi qualifiée de modélisation de la température minimale Tmin, est ensuite effectuée à partir de la température du boîtier T_boîtier estimée, de la puissance électrique P_plq_ch de la plaque chauffante 6 calculée et de la température de la cellule électrochimique secondaire 4b considérée, soit obtenue par une mesure unique par l'intermédiaire d'un capteur 23a de température T_cell_sec au niveau d'une cellule électrochimique secondaire 4b déterminée, soit, tel qu'indiqué ci-dessus, par sélection de la température la plus basse mesurée parmi une pluralité de cellules électrochimiques secondaires 4b comprises dans des modules de batterie 40 distincts. La prise en compte de ces différents types de données est ici schématiquement représentée à la figure 4, il est néanmoins entendu que lesdits types de données sont considérés distinctement et non de manière confondue par l'unité de traitement 21. Le procédé selon l'invention permet ainsi une estimation, par application d'un modèle de calcul davantage détaillé ci-après, de la température minimale Tmin au sein du dispositif de batterie 3.

Optionnellement, la phase d'estimation P01 de la température minimale Tmin comprend, en outre, l'application d'une correction α, appliquée à la puissance électrique de la plaque chauffante 6, configurée pour prendre en compte une hétérogénéité de température de la plaque chauffante 6. Une telle correction est notamment calibrée par le constructeur préalablement à la mise en circulation du véhicule 1. Un tel principe permet d'optimiser le modèle mis en œuvre, notamment en considérant le fait qu'une plaque chauffante 6 tend à présenter une chaleur plus importante au niveau de ses extrémités, notamment au niveau d'une zone d'alimentation en énergie électrique.

Optionnellement encore, la phase d'estimation P01 de la température minimale Tmin comprend, en outre, l'application d'au moins une constante structurelle représentative d'au moins une caractéristique relative au dispositif de batterie 3, tel qu'un matériau du boîtier 30, une épaisseur du boîtier 30, une taille du dispositif de batterie 3 et/ou une masse du boîtier 30. Une telle constante peut être, par exemple, calibrée par le constructeur en amont de l'exécution du procédé selon l'invention. Elle permet de prendre en compte, dans une certaine mesure, l'impact de la structure du boîtier 30 du dispositif de batterie 3 sur les pertes thermiques décrites précédemment et/ou la structure des cellules électrochimiques 4. Par exemple et de manière non limitative, dans les formules ci-après, la constante m.Cp est appliquée, dans laquelle m correspond à une masse d'au moins une cellule électrochimiques 4, notamment des différentes cellules électrochimiques, et Cp correspond à la capacité calorifique d'au moins une cellule électrochimiques 4, notamment des différentes cellules électrochimiques.

Additionnellement ou alternativement, la phase d'estimation P01 de la température minimale Tmin comprend, optionnellement, la prise en compte d'une correction représentative d'une latence liée à l'inertie thermique entre la puissance délivrée par la plaque chauffante 6 et son impact sur l'estimation de la température minimale Tmin au niveau de la cellule électrochimique primaire 4a. La prise en compte d'une telle latence est, par exemple, modélisée par l'application d'un filtre temporel sur la puissance électrique P_plq_ch de la plaque chauffante 6.

Ainsi, optionnellement, le procédé selon l'invention peut comprendre l'exécution d'une phase de calibration, non représentée, exécutée préalablement à la phase d'estimation P01 et comprenant la calibration d'au moins une valeur parmi :
- la correction α, appliquée à la puissance électrique de la plaque chauffante 6, configurée pour prendre en compte une hétérogénéité de température de la plaque chauffante 6 ;
- la constante structurelle m.Cp représentative d'au moins une caractéristique relative au dispositif de batterie 3, notamment au boîtier 30 et/ou à la structure des cellules électrochimiques 4 du dispositif de batterie 3 ; et/ou
- la correction représentative de la latence liée à l'inertie thermique entre la puissance de chauffe délivrée par la plaque chauffante et son impact sur la température minimale Tmin de la cellule électrochimique primaire 4a.

Par exemple, une telle calibration peut être effectuée par le constructeur pour plusieurs véhicules 1 d'un même modèle ou équipés d'un même modèle de dispositif de batterie 3.

Notamment, l'estimation E04 de la température minimale Tmin à un instant t comprend la prise en compte d'une valeur de la température minimale Tmin estimée lors d'une exécution antérieure du procédé selon l'invention, notamment lors d'une exécution antérieure de la phase d'estimation P01. Particulièrement, l'estimation E04 de la température minimale Tmin à un instant t comprend la prise en compte d'une valeur estimée de la température minimale Tmin estimée à un instant t-k, par exemple à un instant t-1.

Ainsi, l'estimation E04 de la température minimale Tmin en fonction du temps peut, par exemple, être obtenue par l'équation suivante : $\begin{matrix}\frac{dTmin \left(t\right)}{dt} = \\ \frac{dT _ cell _ sec \left(t\right)}{dt} + \left(\frac{α - 1}{m . Cp}\times P_plaque_ch\left(t\right)\right) + \frac{\left(T_boîtier\left(t\right)-T_min\left(t-k\right)\right)}{m . Cp . R _ pertes}\end{matrix}$

Où :
dTmin/dt est l'évolution de la température minimale estimée en fonction du temps ;
Tmin est la température minimale estimée au sein du dispositif de batterie 3 à un instant t-k, notamment à l'instant t-1 ;
T_cell_sec est la température mesurée de l'au moins une cellule électrochimique secondaire 4b à l'instant t ;
m.Cp est la constante structurelle appliquée en fonction de la structure du dispositif de batterie 3, notamment de la structure d'au moins l'une des cellules électrochimiques 4, voire des différentes cellules électrochimiques 4 ;
P_plaque_ch est la puissance électrique P_plq_ch de la plaque chauffante 6 appliquée unitairement pour la gestion thermique de la cellule électrochimique secondaire 4b, notamment correspondant à la cellule électrochimique présentant une position centrale au sein du dispositif de batterie 3 et/ou du module de batterie 40 considéré, à l'instant t ;
T_boîtier est la température estimée du boîtier 30 à l'instant t ;
R_pertes correspond à une résistance thermique de la cellule électrochimique primaire 4a vers le boîtier 30 ;
α est la constante représentative de l'hétérogénéité du chauffage de la plaque chauffante 6.

Et où à t=0, on considère que la température minimale Tmin estimée est égale à la température T_cell_sec mesurée de l'au moins une cellule électrochimique secondaire 4b, la température des différentes cellules électrochimiques 4 du dispositif de batterie 3 étant alors homogène.

L'équation déterminant la température minimale Tmin du dispositif de batterie 3 est obtenue à partir d'une équation 2) représentative du bilan de température de l'au moins une cellule électrochimique secondaire 4b, notamment ici disposée dans la zone centrale du dispositif de batterie 3 et/ou de l'un des modules de batterie 40 lorsque le dispositif de batterie 3 en comprend, et d'une équation 3) représentative d'un bilan thermique de l'au moins une cellule électrochimique primaire 4a. Une telle modélisation permet avantageusement d'estimer la température minimale Tmin du dispositif de batterie 3 à partir de la température mesurée au niveau de l'au moins une cellule électrochimique secondaire 4b en prenant en compte les pertes thermiques résultant des écarts de températures entre la portion proximale 41 et la portion distale 42 d'une part et les pertes thermiques résultant de l'écart de température entre la plaque chauffante 6 et le boîtier 30, correspondant à des fuites de chaleurs dues à la structure du boîtier 30.

Pour l'au moins une cellule électrochimique secondaire 4b, les pertes énergétiques sont considérées comme étant négligeables par rapport à celles de la cellule électrochimique primaire 4a, tel que décrit précédemment. Le bilan thermique de l'au moins une cellule électrochimique secondaire 4b prend ainsi en compte le réchauffement interne de la cellule électrochimique 4, résultant de son fonctionnement, et son réchauffement dû au fonctionnement de la plaque chauffante 6. $m . Cp \times \frac{dT _ cell _ sec}{dt} = {RI}^{2} + P _ plq _ ch$

Où :
T_cell_sec est la température mesurée de l'au moins une cellule électrochimique secondaire 4b
m.Cp est la constante structurelle appliquée en fonction de la structure de la cellule électrochimique considérée, par exemple préférentiellement applicable aux différentes cellules électrochimiques 4 ;
P_plq_ch est la puissance électrique P_plq_ch de la plaque chauffante 6 appliquée ;
T_boîtier 30 est la température estimée du boîtier 30 ;
R est la résistance électrique de la cellule électrochimique secondaire 4b
I est l'intensité du courant circulant dans le dispositif de batterie 3, particulièrement dans les cellules électrochimiques 4.

Pour l'au moins une cellule électrochimique primaire 4a, comprenant le point froid, l'équation suivante est appliquée, prenant en compte le réchauffement interne de la cellule électrochimique primaire 4a dû à son fonctionnement, son réchauffement dû à la plaque chauffante 6 et les pertes thermiques résultant de la proximité de ladite cellule avec l'au moins une plaque extrêmale 32 et/ou le boîtier 30 du dispositif de batterie 3 : $m . Cp \times \frac{dTmin}{dt} = {RI}^{2} + α . P _ plq _ ch + \frac{\left(T_boîtier-Tmin\right)}{R _ pertes}$

A laquelle on ajoute (P_plq_ch - P_plq_ch) à des fins de simplification : $\begin{matrix}m . Cp \times \frac{dTmin}{dt} \\ = {RI}^{2} + P _ plq _ ch - P _ plq _ ch + α . P _ plq _ ch + \frac{\left(T_boîtier-Tmin\right)}{R _ pertes}\end{matrix}$

Dans laquelle on intègre l'équation de bilan thermique de l'au moins une cellule secondaire 4b afin de remplacer RI² + P_plq_ch de sorte à simplifier l'équation comme suit : $\begin{matrix}m . Cp \times \frac{dTmin}{dt} \\ = m . Cp \times \frac{dT _ cell _ sec}{dt} + \left(α-1\right) P _ plq _ ch + \frac{\left(T_boîtier-Tmin\right)}{R _ pertes}\end{matrix}$

De sorte à obtenir l'équation 1) indiquée ci-dessus en divisant par la constante m.Cp : $\frac{dTmin}{dt} = \frac{dT _ cell _ sec}{dt} + \left(\frac{α - 1}{m . Cp}\times P_plq_ch\right) + \frac{\left(T_boîtier-Tmin\right)}{m . Cp \times R _ pertes}$

Suite à la phase d'estimation P01 de la température minimale Tmin du dispositif de batterie 3, le procédé d'optimisation 100 du fonctionnement du dispositif de batterie 3 comprend une phase d'utilisation P02 de la valeur de température minimale Tmin estimée.

Une telle phase comprend, dans un premier temps, la détermination E05 d'une valeur à appliquer d'au moins un paramètre prenant en compte la température minimale Tmin estimée du dispositif de batterie 3 puis l'application E06 d'une telle valeur. Par exemple, le paramètre considéré est sélectionné parmi :
- une puissance électrique maximale autorisée P_max de charge ou de décharge à appliquer au dispositif de batterie 3, correspondant à une puissance électrique pouvant être mise en œuvre par le dispositif de batterie 3 sans risque de provoquer une usure prématurée des cellules électrochimiques 4 du fait de leur température respectivement lors d'une phase de charge du dispositif de batterie 3, par rattachement à une borne ou par freinage régénératif, ou lors d'une phase de décharge du dispositif de batterie 3 ;
- une puissance électrique de la plaque chauffante 6 à mettre en œuvre en fonction de la différence entre la température maximale mesurée au niveau d'au moins une cellule électrochimique secondaire 4b et la température minimale Tmin estimée au sein du dispositif de batterie 3 ;
- une puissance électrique de la plaque chauffante 6 à mettre en œuvre en fonction de la différence entre la température de la plaque de refroidissement 5 et la température minimale Tmin estimée au sein du dispositif de batterie 3.

La valeur du paramètre considéré est ainsi déterminée par l'unité de traitement 21 puis transmise à un module de contrôle 24, compris dans le système d'optimisation ou équipant le véhicule 1, en vue de son application. Le module de contrôle 24 apte à piloter le dispositif de batterie 3 de sorte à ajuster au moins l'un des paramètres précités.

Notamment, dans les exemples précités, l'unité de traitement 21 détermine un écart de température entre la minimale Tmin estimée et au moins une autre température, telle que la température de la plaque de refroidissement 5 et/ou la température maximale mesurée au niveau de l'au moins une cellule électrochimique secondaire 4b, et chaque écart ainsi déterminé est utilisé pour alimenter des données enregistrées, notamment une ou plusieurs cartographies, de sorte à les associer à des valeurs de puissances électriques telles que définies plus haut visant à limiter les puissances appliquées à la plaque chauffante 6. Par exemple encore, un tel principe peut comprendre l'attribution d'un facteur de limitation, par exemple évoluant sur échelle prédéfinie, représentatif de l'importance de la limitation appliquée à la puissance considérée. Notamment, la ou les cartographies sont calibrées de sorte à minimiser l'usure des cellules électrochimiques 4.

L'application E06 de la valeur d'au moins l'un des paramètres précité, déterminée à partir de la température minimale Tmin, permet ainsi d'optimiser le fonctionnement du dispositif de batterie 3 afin d'en limiter l'usure en prévenant la mise en oeuvre de paramètres, de température et/ou de puissance, tel qu'indiqués plus haut, dans des conditions susceptibles d'endommager les cellules électrochimiques 4 lorsqu'il n'est pas possible de directement mesurer la température la plus froide présente au sein du dispositif de batterie 3.

Le procédé selon l'invention permet ainsi avantageusement d'ajuster la puissance électrique du dispositif de batterie afin de limiter l'activité électro-chimique des cellules les plus froides afin d'éviter de les endommager et/ou permet d'adapter le fonctionnement de la plaque chauffante 6 selon le besoin. Il peut avantageusement être mis en œuvre à moindre coût, en utilisant des composants du véhicule 1 et du dispositif de batterie 3.

La présente invention ne saurait toutefois se limiter aux moyens et configurations décrits et illustrés ici et elle s'étend également à tout moyen ou configuration équivalent et à toute combinaison techniquement opérante de tels moyens dans la mesure où ils remplissent *in fine* les fonctionnalités décrites et illustrées dans le présent document.

## Revendications

1. Procédé d'optimisation (100) du fonctionnement d'un dispositif de batterie (3) d'un véhicule (1), ledit dispositif comprenant un boîtier (30) et des cellules électrochimiques (4), le dispositif de batterie (3) comprenant, en outre, une plaque de refroidissement (5), configurée pour permettre la circulation d'un fluide caloporteur, et une plaque chauffante (6) électrique disposée de sorte à être interposée entre la plaque de refroidissement (5) et les cellules électrochimiques (4), le procédé comprenant une phase d'estimation (P01) d'une température minimale (Tmin) correspondant à une température estimée en un point le plus froid du dispositif de batterie (3) compris dans une cellule électrochimique primaire (4a), ladite phase comprenant :
- l'estimation (E01) d'une température du boîtier (30) comportant la mesure d'une température extérieure (T_ext) au véhicule (1) par l'intermédiaire d'un capteur (23) et/ou la mesure d'une température de la plaque de refroidissement (5) par l'intermédiaire d'un capteur (23) de température ;
- l'estimation (E02) d'une puissance électrique (P_plq_ch) de la plaque chauffante (6) comportant la mesure d'une tension (U_plq_ch) du dispositif de batterie (3) et d'une intensité (I_plq_ch) du courant de ladite plaque chauffante (6) ;
- la mesure (E03) d'au moins une température (T_cell_sec) d'au moins une cellule électrochimique secondaire (4b) distincte de la cellule électrochimique primaire (4a) par l'intermédiaire d'un capteur (23) ;
- l'estimation (E04) de la température minimale (Tmin) à un instant t donné à partir de la température du boîtier (30), de la puissance électrique (P_plq_ch) de la plaque chauffante (6) et de la température de la cellule électrochimique secondaire (4b) ;
le procédé d'optimisation (100) comprenant, en outre, une phase d'utilisation (P02) de la température minimale (Tmin) estimée, comprenant :
- la détermination (E05) d'une valeur à appliquer d'au moins un paramètre prenant en compte la température minimale (Tmin) estimée, tel qu'une puissance électrique maximale de charge ou de décharge autorisée du dispositif de batterie (3), une puissance électrique de charge ou de décharge autorisée du dispositif de batterie (3) à appliquer, une puissance électrique de la plaque chauffante (6) et/ou une puissance électrique maximale de la plaque chauffante (6) ;
- l'application (E06) de la valeur dudit paramètre.

2. Procédé d'optimisation (100) selon la revendication précédente, dans lequel) la cellule électrochimique secondaire (4b) présente une position centrale, plus distante d'une paroi latérale du boîtier (30) et/ou d'une plaque extrêmale (32) que la cellule électrochimique primaire (4a).

3. Procédé d'optimisation (100) selon l'une des revendications précédentes, dans lequel le dispositif de batterie (3) comprend une pluralité de modules de batterie (40) comportant chacun au moins une cellule électrochimique secondaire (4b), le procédé comprenant la mesure (E03) d'une température des cellules électrochimiques (4) secondaires propres aux différents modules de batterie (40) par l'intermédiaire de capteurs (23) et l'estimation (E04) de la température minimale (Tmin) étant réalisée à partir d'une température la plus basse sélectionnée parmi les températures (T_cell_sec) mesurées au niveau des cellules électrochimiques (4) secondaires des différents modules de batterie (40).

4. Procédé d'optimisation (100) selon l'une des revendications précédentes, dans lequel l'estimation (E04) de la température minimale (Tmin) au sein du dispositif de batterie (3) à un instant t donné comprend l'application d'au moins l'une parmi :
- une correction (α) configurée pour prendre en compte une hétérogénéité de température de la plaque chauffante (6) ;
- une constante (m. Cp) représentative d'au moins une caractéristique relative à la structure du dispositif de batterie (3) et/ou à la structure des cellules électrochimiques (4) ; et/ou
- une correction représentative d'une latence liée à l'inertie thermique entre la puissance de chauffe délivrée par la plaque chauffante (6) et son impact sur la température minimale (Tmin) de la cellule électrochimique primaire (4a).

5. Procédé d'optimisation (100) selon la revendication précédente, dans lequel l'estimation (E04) de la température minimale (Tmin) au sein du dispositif de batterie (3) à un instant t donné comprend l'application d'une constante (m.Cp) représentative de la structure du dispositif de batterie (3) et/ou des cellules électrochimiques (4) et l'application de la correction (α) configurée pour prendre en compte une hétérogénéité de température de la plaque chauffante (6), l'estimation de la température minimale (Tmin) en fonction du temps étant définie par : $\begin{matrix}\frac{dTmin \left(t\right)}{dt} = \\ \frac{dT _ cell _ sec \left(t\right)}{dt} + \left(\frac{α - 1}{m . Cp}\times P_plaque_ch\left(t\right)\right) \\ + \frac{\left(T_boîtier\left(t\right)-T_min\left(t-k\right)\right)}{m . Cp . R _ pertes}\end{matrix}$ Où :
dTmin/dt est l'évolution de la température minimale estimée en fonction du temps ;
Tmin est la température minimale estimée au sein du dispositif de batterie (3) à un instant t-k ;
T_cell_sec est la température mesurée de l'au moins une cellule électrochimique secondaire (4b) à l'instant t ;
m.Cp est la constante structurelle appliquée en fonction de la structure du dispositif de batterie (3), notamment des cellules électrochimiques (4) ;
P_plaque_ch est la puissance électrique P_plq_ch de la plaque chauffante (6) appliquée à l'instant t ;
T_boîtier est la température estimée du boîtier (30) à l'instant t ;
R_pertes correspond à une résistance thermique de la cellule électrochimique primaire (4a) vers le boîtier (30) ;
α est la constante représentative de l'hétérogénéité du chauffage de la plaque chauffante (6).

6. Procédé d'optimisation (100) selon l'une des revendications précédentes, dans lequel l'estimation (E04) de la température minimale (Tmin) au sein du dispositif de batterie (3) à un instant t donné comprend la prise en compte d'une estimation antérieure de la température minimale au sein du dispositif de batterie (3), obtenue à un instant t-k.

7. Procédé d'optimisation (100) selon l'une des revendications précédentes, dans lequel la phase d'estimation (P01) est mise en œuvre à intervalle de temps régulier ou en temps réel :
- lors d'une période pendant laquelle un écart de température entre l'au moins une température mesurée de l'au moins une cellule électrochimique secondaire (4b) et une valeur de la température minimale (Tmin) préalablement estimée est strictement supérieure à un seuil d'écart prédéfini ; et/ou
- lors d'une période de fonctionnement de la plaque chauffante (6) et lors d'une période prédéfinie, suivant l'extinction de la plaque chauffante (6), de durée inférieure ou égale à un seuil de durée prédéfini.

8. Système d'optimisation (2) du fonctionnement d'un dispositif de batterie (3) d'un véhicule équipé, le système comprenant des éléments matériels et/ou logiciels mettant en œuvre le procédé selon l'une des revendications précédentes, les éléments matériels comportant au moins une unité de traitement (21) de données et un module de détection (22) comportant une pluralité de capteurs (23) de température.

9. Véhicule automobile comprenant un dispositif de batterie (3) et un système d'optimisation du fonctionnement du dispositif de batterie (3) selon la revendication précédente.
